# EUROPÄISCHE PATENTSCHRIFT

(11) **EP 0 510 546 B1**
(45) Veröffentlichungstag und Bekanntmachung des Hinweises auf die Patenterteilung: **29.03.1995**
(21) Anmeldenummer: 92106691.6
(22) Anmeldetag: 16.04.1992
(51) Int. Cl.: C23C 28/00, A47J 36/02

(54) **Verfahren zum Beschichten von Haus- und Küchengerätschaften**
Process for coating household and kitchen utensils
Procédé pour le revêtement d'utensiles de ménage ou de cuisine

(30) Priorität: 23.04.1991 DE 4113211
(43) Veröffentlichungstag der Anmeldung: 28.10.1992
(73) Patentinhaber: Heinzel, Winfried, D-88709 Meersburg (DE)
(72) Erfinder: Heinzel, Winfried, D-88709 Meersburg (DE)
(74) Vertreter: Witte, Alexander, Dr.-Ing.

(56) Entgegenhaltungen:
- EP-A- 0 206 121
- EP-A- 0 285 161
- EP-A- 0 331 155
- DD-A- 284 056
- DE-A- 3 638 264

## Beschreibung

Die Erfindung betrifft ein Verfahren zum Beschichten einer Haus- und Küchengerätschaft. Die Erfindung betrifft ferner eine Haus- und Küchengerätschaft mit einem metallischen Grundkörper, mit mindestens einer auf eine Oberfläche des Grundkörpers aufgebrachten harten Schicht von weniger als 100 »m Dicke und mit einer die harte Schicht überdeckenden Antihaftschicht, deren Dicke kleiner ist als diejenige der harten Schicht.

Ein Verfahren und eine Gerätschaft der vorstehend genannten Art sind aus der EP-B-0 206 121 bekannt.

Es ist bekannt, Haus- und Küchengerätschaften, beispielsweise Bügeleisen, Bratpfannen, Töpfe, Backformen, Warmhalteplatten, Bräunungsplatten und dgl. mit einer Antihaftschicht zu versehen. Nach dem eingangs genannten Verfahren wird zunächst durch Flammspritzen, Plasmasprühen oder dgl. mindestens eine keramische Hartstoffschicht, vorzugsweise zunächst eine Haftgrundschicht und dann die Hartstoffschicht auf eine Oberfläche eines metallischen Grundkörpers aufgebracht. Die Oberfläche wird dabei bevorzugt zunächst gereinigt und/oder sandgestrahlt. Auf die nun zuoberst liegende Hartstoffschicht wird dann die Antihaftschicht in Form eines Antihaftlacks, vorzugsweise eines PTFE-Lacks aufgesprüht, und zwar in einer Menge, daß die Poren der porösen Hartstoffschicht gerade ausgefüllt werden und die Oberfläche der Hartstoffschicht von einem dünnen Film der Antihaftschicht überzogen ist, nachdem diese durch eine Wärmebehandlung eingebrannt wurde.

Als Ergebnis der bekannten Verfahren ergibt sich damit eine Gerätschaft, bei der ein ausgehärterter PTFE-Film die poröse Hartstoffschicht überdeckt, die infolge ihrer Struktur an der Oberfläche mit Tälern und Spitzen versehen ist.

Obwohl auf diese bekannte Weise eine Beschichtung erzielt wird, deren Antihafteigenschaften durch die Antihaftschicht und deren mechanische Stabilität durch die als Stützpunkte wirkenden Spitzen der Hartstoffschicht bestimmt wird, kann es unter bestimmten Bedingungen doch zu einer Verminderung der Antihafteigenschaften kommen, wenn das Material der Antihaftschicht einer hohen Belastung ausgesetzt wird. Der Grund hierfür ist folgender:
Polytetrafluorethylen (PTFE) besteht bekanntlich aus langgestreckten linearen Ketten von aneinandergereihten CF₂-Einheiten. Der F-C-F-Winkel, d.h. der Winkel zwischen den Fluor- und den Kohlenstoffatomen liegt im Bereich des Tetraeder-Winkels, d.h. bei ca. 109°. Die drei Moleküle, die eine CF₂-Einheit aufbauen, liegen an den Ecken eines Dreiecks. In Richtung der Längsmittelachse der PTFE-Kette gesehen, die durch die aneinandergereihten Kohlenstoffatome gebildet wird, sind aufeinanderfolgende CF₂-Einheiten jeweils im gleichen Drehsinne um ca. 27° verdreht angeordnet. Dadurch bildet sich eine Helixstruktur der aneinandergereihten CF₂-Einheiten aus, wobei eine vollständige Wendel der Helixstruktur aus etwa 13 CF₂-Einheiten ausgebildet ist. Diese Verdrillung der Polymerkette führt zu der gestreckten Kettenstruktur. Auf der dichten und dadurch "schützenden" Haut der Fluoratome um die Kette aus Kohlenstoff-Atomen beruht die außergewöhnliche Chemikalienbeständigkeit des PTFE. Die thermische Stabilität ist primär eine Folge der hohen Bindungsenergie der C-F-Bindung. Durch die geringen Wechselwirkungskräfte zwischen den Molekülen erklären sich Eigenschaften wie geringer Reibungskoeffizient und minimaler Haftung zu anderen Materialien. Die langgestreckten verdrillten PTFE-Ketten können sich sehr nahe aneinanderlegen und dadurch einen dichten, kompakten Verband an einzelnen Makromolekülketten bilden. Daraus ergeben sich hervorragende mechanische Eigenschaften gegenüber Druckkräften und dgl..

Makroskopisch gesehen führt die Tendenz zur Ausbildung von linearen Ketten auch zu einer gewissen Elastizität, d.h., es wird ein Rückstellmoment erzeugt, falls eine Kette aus ihrer linearen Ausrichtung herausgebogen wird.

Mikroskopisch gesehen bestehen zwischen den einzelnen langgestreckten PTFE-Ketten jedoch keine elektrostatischen Wechselwirkungen im Sinne von Anziehungskräften, da die "Außenhaut" der verdrillten Ketten durchgehend aus Fluoratomen gebildet wird, die allesamt Orte relativ hohen negativen Ladungsanteils sind.

Wird nun eine "Nahordnung" zwischen benachbarten PTFE-Ketten gestört, beispielsweise durch äußere mechanische Einflüsse, so ist keine Rückstellkraft aufgrund elektrostatischer intermolekularer Wechselwirkungen vorhanden, die dafür sorgen könnte, daß die Ketten entweder in ihre ursprüngliche Nahordnung zurückkehren, oder in der nunmehr gestörten Nahordnung gehalten werden. Dies wäre an sich möglich durch Ausbildung von neuen elektrostatischen intramolekularen Wechselwirkungen nach Änderung der ursprünglichen Nahordnung aufgrund der Einwirkung der äußeren Kraft.

Den Bereich der gestörten Nahordnung der einzelnen PTFE-Ketten kann man sich als ein Gewirr einzelner Fäden darstellen, die nicht mehr in einen Zustand geordneter Ausrichtung von linearen nebeneinander angeordneten Ketten zurückkehren. Der gestörte Nahordnungszustand der wirren Ketten kann sich nunmehr durch andauernde mechanische Belastungen vergrößern und zu einem völligen Auftrennen des Verbundes führen.

Betrachtet man das Beispiel einer Bratpfanne, die mit einer Antihaftschicht aus PTFE versehen ist, so können mechanische Belastungen, beispielsweise durch eine Messerschneide, zunächst mikroskopische Störungen im Nahordnungsbereich der aneinanderliegenden PTFE-Ketten verursachen. Durch weitere mechanische Belastungen, oder auch durch den weiteren bestimmungsgemäßen Gebrauch, d.h. also Temperaturwechsel, Berührung mit heißen Fetten oder dgl., können weitere Aufweitungen der Änderung des gestörten Nahordnungszustandes erfolgen. So kann sich beispielsweise ein zunächst nicht sichtbarer mikroskopischer "Schnitt" nach und nach zu einem makroskopisch erkennbaren Schnitt oder Riß entwickeln.

Bei der Verwendung von PTFE-Füllstoffmischungen (sogenannte "Compounds"), bei denen den PTFE-Ketten Füllstoffe zugesetzt werden, sind diese Füllstoffe vor äußeren Einwirkungen durch die linearen PTFE-Ketten mit hoher Nahordnung geschützt. Wird diese Nahordnung gestört, sind die Füllstoffe zwischen den PTFE-Ketten den äußeren Einflüssen ungeschützter ausgesetzt, so daß diese Füllstoffe herausgelöst werden können. Dadurch verändern sich dann die mechanischen Eigenschaften der PTFE-Compounds, nämlich gerade um diejenigen, deretwegen diese Füllstoffe zugesetzt wurden. Die an Füllstoffen verarmten Bereiche mit gestörtem Nahordnungsbereich an PTFE-Ketten bilden Stellen, an denen äußere Einflüsse verstärkt wirksam werden können, was sich in einem Ablösen oder Aufspleißen von PTFE-Schichten auf Metalloberflächen äußert.

Aus der vorstehenden Betrachtung folgt, daß eine Antihaftschicht der hier interessierenden Art, wie sie bei einer Haus- und Küchengerätschaft verwendet wird, nicht nur durch unmittelbaren mechanischen Einfluß zerstört werden kann (beispielsweise durch Schneiden), der einwirkende Druck hat vielmehr auch unmittelbare Auswirkungen auf das molekulare Gefüge und zwar infolge der besonderen makromolekularen Struktur von Antihaftmaterialien.

Ruft man sich nun noch einmal in Erinnerung, daß bei den bekannten Verfahren und Gerätschaften Hartstoffschichten verwendet werden, bei denen der Höhenunterschied zwischen Tälern und Spitzen der Oberfläche nur einige 10 »m beträgt, so ist leicht einsehbar, daß eine mechanische Belastung sich praktisch durch das gesamte Materialvolumen ausbreitet, auch wenn infolge der Geometrie der Oberfläche die unmittelbare mechanische Einwirkung nur im Bereich der Spitzen der Hartstoffschicht auftreten kann. Es bildet sich jedoch auch in der Umgebung der Spitze ein Druckkegel aus, der infolge der nur sehr geringen Abmessungen den gesamten Bereich des Antihaftmaterials erfaßt.

Der Erfindung liegt daher die Aufgabe zugrunde, ein Verfahren und eine Haus- oder Küchengerätschaft der eingangs genannten Art dahingehend weiterzubilden, daß die vorstehend erläuterten Nachteile vermieden werden, so daß die mechanische Beständigkeit der Beschichtung weiter verbessert wird.

Diese Aufgabe wird nach einem Verfahren der eingangs genannten Art durch die folgenden Verfahrensschritte gemäß Anspruch 1 gelöst:
- Einbringen von Rillen in eine Oberfläche eines metallischen Grundkörpers, wobei die Rillen eine Breite und eine Tiefe von jeweils zwischen 100 »m und 400 »m aufweisen;
- Aufbringen von mindestens einer thermisch gespritzten, insbesondere plasmagesprühten Schicht auf die gerillte Oberfläche, wobei die Dicke der Schicht weniger als halb so groß wie die Tiefe ist; und
- Aufbringen einer Antihaftschicht auf die thermisch gespritzte Schicht, wobei die Dicke der Antihaftschicht kleiner als die der thermisch gespritzten Schicht ist.

Gemäß der eingangs genannten Haus- oder Küchengerätschaft wird die der Erfindung zugrundeliegende Aufgabe erfindungsgemäß entsprechend Anspruch 7 dadurch gelöst, daß die Oberfläche mit Rillen versehen ist, die eine Breite und eine Tiefe von jeweils zwischen 100 »m und 400 »m aufweisen.

Die der Erfindung zugrundeliegende Aufgabe wird auf diese Weise vollkommen gelöst.

Die beschriebene Strukturierung der Oberfläche mit Rillen, deren Abmessungen wesentlich größer als die Schichtdicke ist, hat nämlich den Vorteil, daß in den tiefer liegenden Zonen der Rillen die geschilderten negativen Effekte nicht auftreten können. Die Abmessungen der Rillen sind nämlich einerseits so klein, daß übliche harte Instrumente aus Haus und Küche mit ihren Schneiden oder Spitzen nicht hineingeraten können, andererseits sind die Rillen aber auch so groß, daß sich mechanische Belastungen, wie sie an den obersten Spitzen ausgeübt werden, nicht bis in die tiefere Zonen der Rillen ausbreiten können. Auf diese Weise verbleiben in den tieferen Zonen der Rillen weite Bereiche von Antihaftmaterial, die von allen derartigen Einflüssen verschont sind, so daß deren volle Antihafteigenschaften erhalten bleiben. Ein auf der Antihaftschicht aufliegendes Gut, beispielsweise ein Bratgut in einer Bratpfanne, kann daher allenfalls theoretisch punktuell an den Spitzen der Oberfläche ankleben, während die dazwischenliegenden Bereiche keine Haftung zeigen und daher ein flächiges Anhaften unmöglich ist.

Zwar ist es auch bekannt, z.B. die Bratoberflächen von Bratpfannen mit einer Wabenstruktur zu versehen, bei der in die Oberfläche eine Vielzahl von Vertiefungen eingebracht ist, die bekannten Strukturen haben jedoch erheblich größere Abmessungen. Die Vertiefungen sind bei diesen bekannten wabenförmigen Strukturen nämlich ca. 10 mm breit bzw. haben einen entsprechenden Durchmesser und sie sind auch über 1 mm tief, so daß ihr Inneres mit den üblichen harten Instrumenten, wie sie in Haus und Küche verwendet werden, durchaus zugänglich ist.

Bei bevorzugten Ausgestaltungen des erfindungsgemäßen Verfahrens beträgt die Dicke der thermisch gespritzten Schicht in an sich bekannter Weise zwischen 10 »m und 70 »m, wobei in wiederum bekannter Weise vorzugsweise zwei thermisch gespritzte Schichten, nämlich zunächst eine Haftgrundschicht eine Dicke zwischen 10 »m und 20 »m und als dann darauf eine Hartstoffschicht eine Dicke zwischen 30 »m und 70 »m gesprüht wird.

Ferner ist bevorzugt, wenn die Antihaftschicht mit einer Dicke zwischen 5 »m und 50 »m aufgetragen wird.

Besonders ist bevorzugt, wenn die Rillen mittels Kordieren in die Oberfläche eingebracht werden, d.h. Rillen erzeugt werden, die einander kreuzen. Auf diese Weise entsteht ein definiertes Raster von durch mechanische Belastung gefährdeten Spitzen an der Oberfläche der Hartstoffschicht, die jedoch sämtlich von großen Bereichen unberührten Antihaftmaterials umgeben sind.

Weitere Vorteile ergeben sich aus der Beschreibung und der beigefügten Zeichnung.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind.

Ausführungsbeispiele der Erfindung sind in der Zeichnung dargestellt und werden in der nachfolgenden Beschreibung näher erläutert. Es zeigen:
- Fig. 1: eine Pfanne, teilweise geschnitten und im Ausschnitt stark vergrößert;
- Fig. 2: eine Darstellung, ähnlich Fig. 1, jedoch für ein Bügeleisen;
- Fig. 3: eine stark vergrößerte Schnittdarstellung einer Hartstoffschicht mit Antihaftschicht nach dem Stand der Technik;
- Fig. 4: eine Darstellung, ähnlich Fig. 3, jedoch für eine erfindungsgemäße Beschichtung.

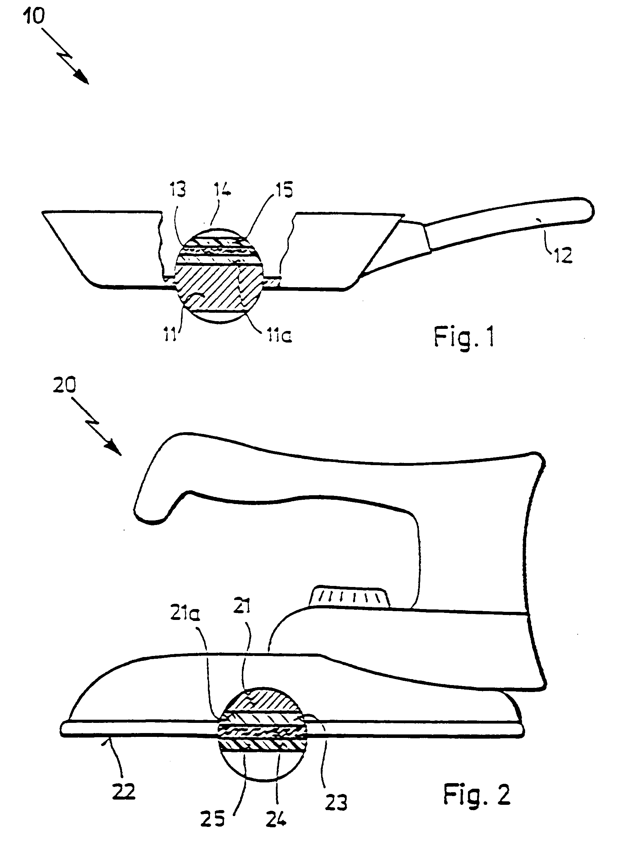

In Fig. 1 bezeichnet 10 insgesamt eine Bratpfanne, die im wesentlichen aus einem metallischen Grundkörper 11 und einem Griff 12 besteht. Der metallische Grundkörper 11 kann aus Stahl, Edelstahl, Gußaluminium, Gußeisen, Kupfer oder dgl. bestehen. Es sind aber auch keramische Pfannen im Rahmen der vorliegenden Erfindung verwendbar.

Der Grundkörper 11 weist eine Innenoberfläche 11a auf, die vorzugsweise durch mechanische Verfahren, insbesondere durch Sandstrahlen, aufgerauht und/oder durch entsprechende Reinigungsverfahren gereinigt sind.

Die Innenoberfläche 11a ist im Plasmasprühverfahren zunächst mit einer Haftgrundschicht 13 versehen. Die Haftgrundschicht 13 besteht bevorzugt aus Nickel-Aluminium oder Chrom-Nickel, es sind jedoch auch andere Haftgrundschichten verwendbar, wie sie an sich aus der Technik des Plasmasprühens bekannt sind. In diesem Zusammenhang versteht sich, daß die Angabe "Plasmasprühen" ebenfalls nur beispielhaft zu verstehen ist, weil statt des Plasmasprühens auch ein Flammspritzen, ein Hochgeschwindigkeits-Plasmasprühen (sogenannten Jet-Kote-Verfahren) oder dgl. angewendet werden kann, insgesamt also ein Verfahren, bei dem pulverförmige metallische, keramische oder metallkeramische Materialien durch thermisches Spritzen auf ein Substrat aufgebracht werden.

Auf die Haftgrundschicht 13 ist eine Hartstoffschicht 14, ebenfalls im Plasmasprühverfahren, aufgebracht. Die Hartstoffschicht 14 kann beispielsweise aus Aluminiumoxid oder einer Mischung Aluminiumoxid/Titanoxid bestehen, es sind jedoch auch hier andere Hartstoffschichten einsetzbar, wie sie an sich aus der Technik des Plasmasprühens bekannt sind.

Die Hartstoffschicht 14 ist an ihrer Oberseite mit einer Antihaftschicht 15 versehen, die bevorzugt aus einem Kunststoff aus Fluorethylenpolymer-Basis, insbesondere Polytetrafluorethylen (PTFE) besteht. Die Antihaftschicht 15 wird bevorzugt in Form eines Antihaftlacks auf die Hartstoffschicht 14 aufgesprüht. Nach dem Aufsprühen der Antihaftschicht 15 wird diese eingebrannt. Dies geschieht bevorzugt in einem Temperaturbereich zwischen 200° und 500°C, vorzugsweise 250° und 350°C, insbesondere 300°C.

In Fig. 2 ist mit 20 ein Bügeleisen bezeichnet, dessen Gleitsohle 22 die ausschnittsweise stark vergrößert dargestellte Struktur ähnlich derjenigen von Fig. 1 hat. Man erkennt, daß auf eine Oberfläche 21a eines metallischen Grundkörpers 21 zunächst eine Haftgrundschicht 23, auf diese wiederum eine Hartstoffschicht 24 und auf diese endlich eine Antihaftschicht 25 aufgebracht wurde. Die Antihaftschicht 25 bildet in diesem Falle die Unterseite der Gleitsohle 22.

Die Werkstoffe der Schichten 23 bis 25 und deren Abmessungen entsprechen sinngemäß denjenigen von Fig. 1.

Es versteht sich, daß die beiden vorstehend erläuterten Beispiele einer Bratpfanne und eines Bügeleisens nur als bevorzugte Anwendungsfälle zu verstehen sind. Selbstverständlich gilt entsprechendes für andere Haus- und Küchengerätschaften, beispielsweise Töpfe, Backformen, Warmhalteplatten, Bräunungsplatten und dgl. mehr.

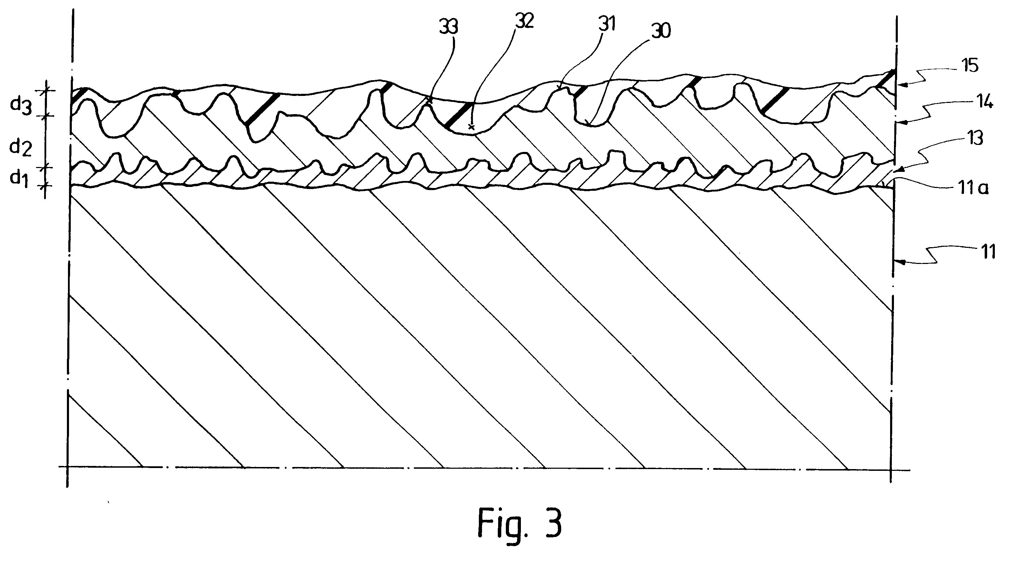

Fig. 3 zeigt in weiter vergrößertem Ausschnitt die Schichtenstruktur der Bratpfanne 10, falls diese nach dem eingangs erläuterten bekannten Verfahren aufgebracht wird.

Hierzu ist aus Fig. 3 die aufgerauhte Innenoberfläche 11a des metallischen Grundkörpers 11 zu erkennen. Auf die aufgerauhte Innenoberfläche 11a ist die nach ihrem Aufbringen unregelmäßig strukturierte Haftgrundschicht 13 aufgetragen, deren mittlere Schichtdicke d₁ vorzugsweise zwischen 10 »m und 20 »m beträgt.

Die Hartstoffschicht 14, die in der Realität porös ist, wird mit einer Schichtdicke d₂ von vorzugsweise zwischen 30 »m und 70 »m aufgetragen, sie ist also deutlich dicker als die Haftgrundschicht 13.

Auf die an ihrer Oberfläche ebenfalls sehr unregelmäßig strukturierte Hartstoffschicht 14 wird nun der Antihaftlack aufgebracht und eingebrannt, so daß die Antihaftschicht 15 entsteht.

Hierzu zeigt Fig. 3 deutlich, daß Täler 30 und Spitzen 31 der Oberfläche der Hartstoffschicht 14 von der Antihaftschicht 15 ausgefüllt bzw. überzogen sind. Bei 32 ist angedeutet, daß das Antihaftmaterial die Täler 30 im wesentlichen ausfüllt, während bei 33 angedeutet ist, daß das Antihaftmaterial die Spitzen 31 nur dünn überzieht.

Die Dicke d₃ der Antihaftschicht 15 beträgt vorzugsweise zwischen 5 »m und 50 »m, wobei die Untergrenze im Bereich der Spitzen 31 bei 33 und der höhere Wert im Bereich der Täler 30 bei 32 anzutreffen ist.

Man kann anhand von Fig. 3 auch nachvollziehen, daß eine auf die Spitzen 31 einwirkende mechanische Belastung sich durch einen Druckkegel bis in die Täler 30 ausbreitet bzw. fortpflanzt.

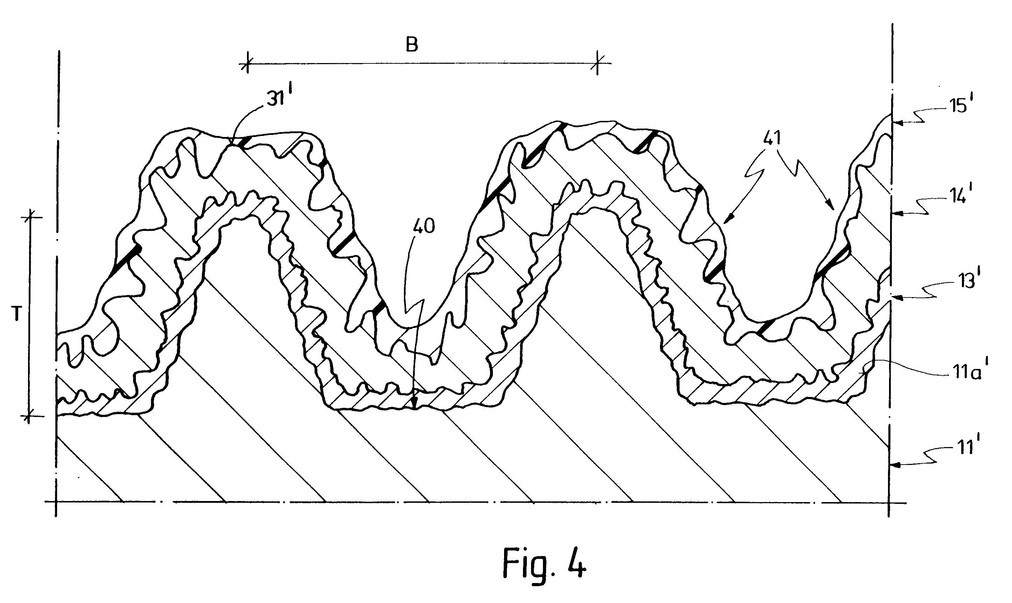

Im Gegensatz und Vergleich dazu zeigt nun Fig. 4 eine erfindungsgemäß aufgebrachte Beschichtung. Dabei sind entsprechende Elemente mit denselben Bezugszeichen wie Fig. 3 versehen, es wurde jeweils lediglich ein ' hinzugefügt.

Der wesentliche Unterschied bei der Beschichtung gemäß Fig. 4 besteht darin, daß der metallische Grundkörper 11' im Bereich seiner Oberfläche 11a' vor der Beschichtung mit Rillen 40 haben eine Breite B und eine Tiefe T, die jeweils deutlich größer ist als die Dicken d₁, d₂, d₃ der ansonsten unverändert aufzubringenden Schichten, die in Fig. 4 mit 13', 14' und 15' bezeichnet sind.

Die Rillen 40 können auf unterschiedliche Art und Weise angebracht werden. Besonders bevorzugt ist, die Rillen 40 durch Rändeln einzubringen, insbesondere durch Kordieren, d.h. durch Rändeln mit sich kreuzenden Rillen. In der Praxis kann dies dadurch geschehen, daß auf der Oberfläche 11a' des Grundkörpers 11' schräg verzahnte Stahlrollen abgerollt werden, wobei die Verzahnungen der Stahlrollen zueinander geneigt sind.

Aus Fig. 4 wird deutlich, daß sich eine mechanische Einwirkung auf die außenliegenden Spitzen 31' nicht auf die Bereiche 41 in der unteren Zone der Rillen 40 auswirken. Vielmehr verbleiben dort die Bereiche 41 mit unbeaufschlagtem Antihaft-Material, so daß in den Bereichen 41 auch kein Haften auftreten kann.

Zwar ist die Dichte der Stützpunkte (Spitzen 31') geringer als bei einer herkömmlichen Beschichtung gem. Fig. 3, dies ist jedoch für die im Bereich der Haus- und Küchengerätschaften auftretenden Anwendungsfälle ohne Bedeutung.

## Patentansprüche

1. Verfahren zum Beschichten von Haus- und Küchengerätschaften mit den Verfahrensschritten:
- Einbringen von Rillen (40) in eine Oberfläche (11a') eines metallischen Grundkörpers (11'), wobei die Rillen (40) eine Breite (B) und eine Tiefe (T) von jeweils zwischen 100 »m und 400 »m aufweisen;
- Aufbringen von mindestens einer thermisch gespritzten, insbesondere plasmagesprühten Schicht (13', 14') auf die gerillte Oberfläche (11a'), wobei die Dicke (d₁, d₂) der Schicht (13', 14') weniger als halb so groß wie die Tiefe (T) ist; und
- Aufbringen einer Antihaftschicht (15') auf die thermisch gespritzte Schicht (13', 14'), wobei die Dicke (d₃) der Antihaftschicht (15') kleiner als die (d₁, d₂) der thermisch gespritzten Schicht (13', 14') ist.

2. Verfahren nach Anspruch 1, dadurch gekennzeichnet, daß die Dicke (d₁, d₂) der thermisch gespritzten Schicht (13', 14') zwischen 10 »m und 70 »m beträgt.

3. Verfahren nach Anspruch 1 oder 2, dadurch gekennzeichnet, daß auf die Oberfläche (11a') zunächst eine Haftgrundschicht (13') einer Dicke (d₁) zwischen 10 »m und 20 »m und alsdann darauf eine Hartstoffschicht (14') einer Dicke (d₂) zwischen 30 »m und 70 »m gespritzt wird.

4. Verfahren nach einem oder mehreren der Ansprüche 1 bis 3, dadurch gekennzeichnet, daß die Antihaftschicht (15') mit einer Dicke (d₃) zwischen 5 »m und 50 »m aufgetragen wird.

5. Verfahren nach einem oder mehreren der Ansprüche 1 bis 4, dadurch gekennzeichnet, daß die Oberfläche (11a') die Oberfläche einer Bratpfanne (10) ist.

6. Verfahren nach einem oder mehreren der Ansprüche 1 bis 5, dadurch gekennzeichnet, daß die Rillen (40) mittels Kordieren eingebracht werden.

7. Haus- und Küchengerätschaft mit einem metallischen Grundkörper (11; 11'; 21), mit mindestens einer auf eine Oberfläche (11a; 11a'; 21a) des Grundkörpers (11; 11', 21) aufgebrachten harten Schicht (13, 14; 13', 14'; 23, 24) von weniger als 100 »m Dicke (d₁, d₂) und mit einer die harte Schicht (13, 14; 13', 14'; 23, 24) überdeckenden Antihaftschicht (15; 15'; 25), deren Dicke (d₃) kleiner ist als diejenige (d₁, d₂) der harten Schicht (13, 14; 13', 14'; 23, 24), dadurch gekennzeichnet, daß die Oberfläche (11a') mit Rillen (40) versehen ist, die eine Breite (B) und eine Tiefe (T) von jeweils zwischen 100 »m und 400 »m aufweisen.

8. Gerätschaft nach Anspruch 7, dadurch gekennzeichnet, daß die Rillen (40) einander kreuzen.

## Claims

1. A process for coating household and kitchen utensils comprising the steps of:
- forming grooves (40) in a surface (11a') of a metallic base member (11'), the grooves (40) having a width (B) and a depth (T) of both between 100 »m and 400 »m;
- applying at least one thermally sprayed layer, in particular a plasma-sprayed layer (13', 14') onto the grooved surface (11a'), the thickness (d₁, d₂) of the layer (13', 14') being less than half the depth (T); and
- applying an anti-adhesion layer (15') on the thermally sprayed layer (13', 14'), the thickness (d₃) of the anti-adhesion layer (15') being smaller than that of the thermally coated layer (13', 14').

2. The process of claim 1, characterized in that the thickness (d₁, d₂) of the thermally sprayed layer (13', 14') is between 10 »m and 70 »m.

3. The process of claim 1 or 2, characterized in that, initially, an adhesion layer (13') having a thickness (d₁) of between 10 »m and 20 »m is sprayed onto the surface (11a') and that, subsequently, a hard material layer (14') having a thickness (d₂) of between 30 »m and 70 »m is sprayed onto the adhesion layer (13').

4. The process of any of claims 1 to 3, characterized in that the anti-adhesion layer (15') is applied with a thickness (d₃) of between 5 »m and 50 »m.

5. The process of any of claims 1 to 4, characterized in that the surface (11a') is the surface of a frying pan (10).

6. The process of any of claims 1 to 5, characterized in that the grooves (40) are formed by knurling.

7. A household and kitchen utensil having a metallic base member (11; 11'; 21), at least one hard layer (13, 14; 13', 14'; 23, 24) of less than 100 »m thickness (d₁, d₂) being applied on a surface (11a; 11a'; 21a) of the metallic base member (11; 11'; 21), an anti-adhesion layer (15; 15'; 25) covering the hard layer (13, 14, 13', 14'; 23, 24) and having a thickness (d₃) being smaller than that (d₁, d₂) of the hard layer (13, 14; 13', 14'; 23, 24), characterized in that the surface (11a') is provided with grooves (40) having a width (B) and a depth (T) of both between 100 »m and 400 »m.

8. The utensil of claim 7, characterized in that the grooves (40) cross each other.

## Revendications

1. Procédé de revêtement d'ustensiles de ménage et de cuisine comportant les phases suivantes:
- génération des rainures (40) dans une surface (11a') d'un corps de base (11') métallique, les rainures (40) ayant respectivement une épaisseur (B) et une profondeur (T) étant comprise entre 100 »m et 400 »m;
- application, selon le procédé de projection thermique, en particulier de projection de plasma, d'une couche (13', 14') sur la surface rainureé (11a'), l'épaisseur (d₁, d₂) de la couche (13', 14') étant moins que la moitié de la profondeur (T); et
- application d'une couche (15') anti-adhésive sur la couche (13', 14') appliquée par projection thermique, l'épaisseur (d₃) de la couche (15') anti-adhésive étant plus menue que celle de la couche (13', 14') appliquée par projection thermique.

2. Procédé selon la revendication 1, characterisée en ce que l'épaisseur (d₁, d₂) de la couche (13', 14') appliquée par projection thermique se monte entre 10 »m et 70 »m.

3. Procédé selon l'une des revendications 1 ou 2, characterisée en ce que tout d'abord une couche (13') adhésive d'une épaisseur (d₁) entre 10 »m et 20 »m est appliquée par projection sur la surface (11a') et qu'ensuite une couche (14') en matériel dur d'une épaisseur (d₂) entre 30 »m et 70 »m est appliquée par projection sur la couche (13') adhésive.

4. Procédé selon l'une des revendications 1 à 3, characterisée en ce que la couche (15') anti-adhésive est appliquée avec une épaisseur (d₃) entre 5 »m et 50 »m.

5. Procédé selon l'une des revendications 1 à 4, characterisée en ce que la surface (11a') est la surface d'une poêle (10).

6. Procédé selon l'une des revendications 1 à 5, characterisée en ce que les rainures (40) sont générées par moletation en X.

7. Ustensile de ménage et de cuisine comportant un corps de base (11; 11'; 21) métallique, au moins une couche (13, 14; 13', 14'; 23, 24) dure d'une épaisseur (d₁, d₂) de moins de 100 »m appliquée sur une surface (11a; 11a'; 21a) du corps de base (11; 11'; 21), et une couche (15; 15'; 25) anti-adhésive d'une épaisseur (d₃) étant plus menue que celle (d₁, d₂) de la couche (13, 14; 13', 14'; 23, 24) dure et couvrant la couche (13, 14; 13', 14'; 23, 24) dure, characterisée en ce que la surface (11a') est pourvue de rainures (40) ayant respectivement une épaisseur (B) et une profonduer (T) étant comprise entre 100 »m et 400 »m.

8. Ustensile selon la revendication 7, characterisé en ce que les rainures (40) se croisent.
